(19) **Europäisches Patentamt**

**European Patent Office**

**Office européen des brevets**

(11) Veröffentlichungsnummer: **0 335 005 B1**

---

(12) **EUROPÄISCHE PATENTSCHRIFT**

(45) Veröffentlichungstag der Patentschrift: **03.06.92**

(21) Anmeldenummer: **88120233.7**

(22) Anmeldetag: **03.12.88**

(51) Int. Cl.⁵: **F16F 13/00**

---

(54) **Hydraulisch dämpfendes Gummilager.**

---

(30) Priorität: **26.03.88 DE 3810310**

(43) Veröffentlichungstag der Anmeldung:
**04.10.89 Patentblatt 89/40**

(45) Bekanntmachung des Hinweises auf die
Patenterteilung:
**03.06.92 Patentblatt 92/23**

(84) Benannte Vertragsstaaten:
**BE FR GB IT NL SE**

(56) Entgegenhaltungen:
**EP-A- 0 234 966      EP-A- 0 242 254**
**EP-A- 0 285 696      DE-A- 1 942 853**
**FR-A- 2 599 450      US-A- 4 690 389**

**PATENT ABSTRACTS OF JAPAN, Vol. 12, No.**
**83 (M-677)(2930), 16.3.1988 & JP-A-62 224 746**
**(TOKAI RUBBER IND.)**

(73) Patentinhaber: **Boge A.G.**
**Bogestrasse 50**
**W-5208 Eitorf/Sieg(DE)**

(72) Erfinder: **Brenner, Heinrich**
**Am Thurmberg 11**
**W-5483 Bad Neuenahr-Ahrweiler(DE)**

---

## Beschreibung

Die Erfindung bezieht sich auf ein hydraulisch dämpfendes Gummilager, bestehend aus einem Innenrohr, einem dazu mit Abstand angeordneten Außenrohr und einer dazwischen eingesetzten, aus zwei Teilen axial zusammengefügten Gummifeder, in welchem dämpfungsmittelgefüllte, hydraulisch über Drosselkanäle miteinander verbundene, durch die Gummifeder abgegrenzte Kammern ausgebildet und nach außen abgedichtet sind, wobei die Drosselkanäle als Ausnehmungen in einander zugewandten Flächen von Teilen des Gummilagers ausgebildet sind, welche den Drosselkanal im zusammengebauten Zustand bilden, und mindestens zwei Kammern zusätzlich über einen, mindestens ein Ventil aufweisenden Kanal miteinander verbunden sind, und wobei ferner die Gummifeder über den Umfang verlaufend angeordnet und gleichzeitig als Tragfeder und Dichtelement ausgebildet ist. Die Gummifeder ist dabei durchgehend senkrecht zu ihrer Mittenachse geteilt ausgebildet.

Es sind derartige Gummilager bekannt (z.B. EP-A-0 234.966), die aus einem Innenrohr, einem dazu mit Abstand angeordneten Außenrohr und dazwischen eingesetztem Gummiteil bestehen. Das Gummiteil ist im Bereich der Kammern nach außen im wesentlichen als Dichtung ausgebildet und wird dadurch im Betrieb auf Zug beansprucht. Dieser Bereich kann als Tragfeder nur bedingt eingesetzt werden und ist nicht in der Lege, große Wege in radialer Richtung zurückzulegen.

Desweiteren sind Gummilager (z.B. FR-A-2.599.450) bekannt, die symmetrisch im Aufbau sind, die Gummifedern sind mit dem Innenteil fest verbunden. Dort ist der Dämpfungskanal in einem separaten Bauteil außerhalb der flüssigkeitsgefüllten Kammer und auch außerhalb der Gummifedern angeordnet. Diese Anordnung erfordert entsprechende aufeinander abgestimmte Bauteile.

Aufgabe der Erfindung ist es, ein hydraulisch dämpfendes Gummilager so auszubilden, daß des Gummiteil bei radialer Belastung auf Schub beansprucht wird und daß hochfrequente Schwingungen mit kleinen Amplituden nicht gedämpft, dagegen niederfrequente Schwingungen mit großen Amplituden stark gedampft werden, wobei aus Gründen einer einfachen Herstellung und Lagerhaltung geometrisch einfache Bauteile verwendet werden.

Zur Lösung dieser Aufgabe ist erfindungsgemäß vorgesehen, daß die Gummifeder aus zwei ringförmigen bei radialer Belastung auf Schub beanspruchten Schubelementen besteht, die jeweils durch Armierungsteile axial abgestützt und mit dem Innen- und Außenrohr verbunden sind, daß die Ausnehmungen für die Drosselkanäle in den einander zugewandten flächen der Schubelemente angeordnet sind und daß in mindestens einer Kammer eine Ausnehmung vorgesehen ist, welche durch eine Membran abgedichtet ist.

Bei dieser Ausbildung ist von Vorteil, daß bei der Montage von zwei im wesentlichen symmetrischen Gummiteilen mit dem Innenrohr und Außenrohr das komplette Lager mit hydraulischen Kammern und Kanälen gebildet wird. Eine derartige Konstruktion läßt eine billige und kompakte Bauart zu, die sich aus wenigen und einfachen Einzelteilen zusammensetzt. Die hinterschnittfreie Gestaltung erlaubt dabei eine einteilige Ausführung der Schubelemente zusammen mit den Trennwenden. Da die beiden Schubelemente gleichzeitig als Tragfeder und Dichtelement ausgebildet sind und in der mittleren Berührungsfläche in einem der Schubelemente oder je zur Hälfte in beiden Schubelementen der Drosselkanal und/oder der Kanal eingeformt ist, werden konstruktiv einfache, im wesentlichen symmetrische Bauteile geschaffen. Diese Bauteile gewährleisten nicht nur eine einfache Herstellung, sondern euch eine einfache Handhabung während der Montage.

Eine vorteilhafte Ausgestaltung des Erfindungsgegenstandes ergibt sich nach den Merkmalen des Anspruchs 2.

In weiterer Ausgestaltung der Erfindung ist vorgesehen, daß das Ventil Bestandteil der Gummifeder ist.

Eine weitere Ausführungsform sieht vorteilhaft vor, daß das Ventil eine als elastische Gummilippe ausgebildete Ventilklappe aufweist.

Bevorzugte Ausführungsbeispiele sind in den Zeichnungen schematisch dargestellt.

Es zeigt:

Figur 1 ein hydraulisch dämpfendes Gummilager im Schnitt

Figur 2 einen Querschnitt eines Gummilagers mit zwei Flüssigkeitskammern

Figur 3 ein Ventil des Bypasses der Figur 2 als Einzelheit im Schnitt

Figur 4 einen Querschnitt durch das in Figur 1 dargestellte Gummilager mit insgesamt vier Kammern

Figur 5 einen Querschnitt eines Gummilagers mit drei Kammern

Figur 6 eine weitere Ausführungsform eines Gummilagers im Schnitt

Figur 7 einen Querschnitt durch das in Figur 6 dargestellte Gummilager.

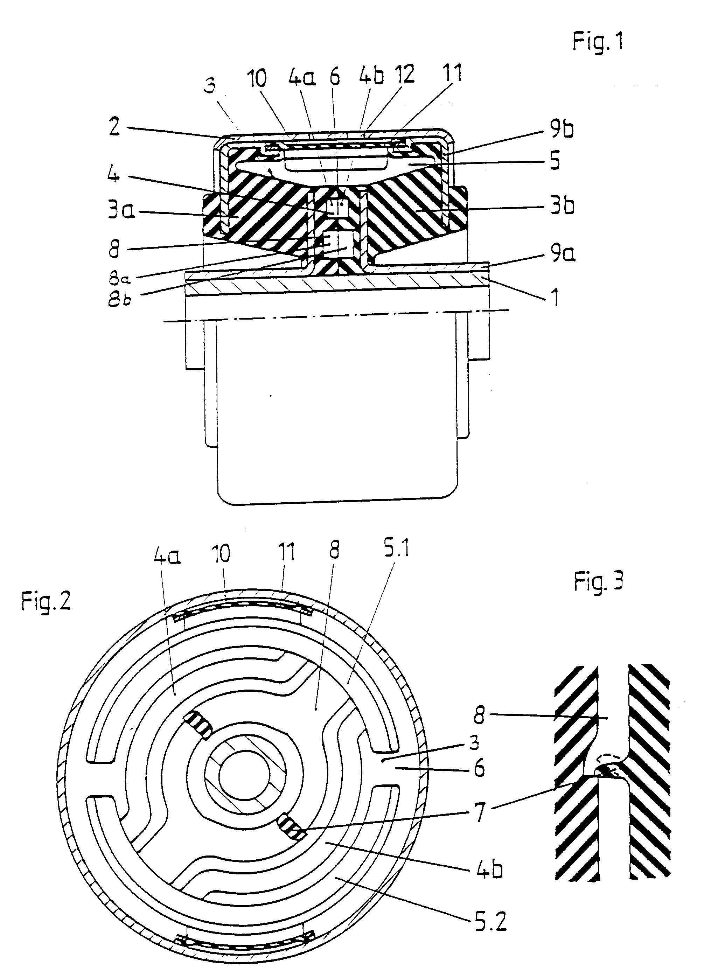

Das in Figur 1 dargestellte hydraulisch dämpfende Gummilager besteht aus einem Innenrohr 1, einem konzentrisch oder exzentrisch dazu im Abstand angeordneten Außenrohr 2 und dazwischen eingesetzter Gummifeder 3, in welchem mit einem Dämpfungsmittel gefüllte, hydraulisch über einen Drosselkanal 4 miteinander verbundene Kammern 5 in Form von Hohlräumen der Gummifeder 3 ausgebildet sind.

Die Gummifeder 3 ist aus zwei gleichen Schubelementen 3a und 3b zusammengesetzt, wobei zur einwandfreien Montage die Armierungsteile 9a und 9b herangezogen werden.

Die beiden Schubelemente 3a und 3b besitzen in den einander zugewandten Flächen 6 jeweils Ausnehmungen 4a und 4b, die nach dem Zusammenbau den Drosselkanal 4 bzw. den als Bypass geschelteten Kanal 8 bilden.

In der Figur 2 ist ein Querschnitt des in Figur 1 dargestellten Gummilagers gezeigt, wobei wiederum zwischen dem Innenrohr 1 und dem Außenrohr 2 die Gummifeder 3 angeordnet ist. In dieser Ausführungsform besitzt die Gummifeder 3 eine Kammer 5.1 und eine weitere Kammer 5.2, die über zwei Drosselkanäle 4a und 4b miteinander in Verbindung stehen. Parallel zu den Drosselkanälen 4a und 4b ist jeweils ein Kanal 8 in Form eines Bypasses gezeigt. Die vorgesehenen Ventile 7 sind als Rückschlagventile ausgebildet, so daß jeweils nur eine einzige Strömungsrichtung über das jeweilige Ventil 7 möglich ist. Das bedeutet, daß der Bypaß von der Kammer 5.1 in die Kammer 5.2 über ein Ventil 7 verlaufend und der Bypaß von der Kammer 5.2 in umgekehrter Richtung zur Kammer 5.1 über das entgegengesetzt angeordnete Ventil 7 verleufend angeordnet ist.

Figur 3 zeigt die Gummifeder 3 als Einzelheit in vergrößertem Maßstab. Das Ventil 7 ist als Bestandteil eines Schubelementes 3a bzw. 3b ausgebildet und somit einteilig. Durch den mit dem Ventil 7 zusammenarbeitenden Anschlag des entgegengesetzt angeordneten Schubelementes besitzt das Ventil die Wirkung eines Rückschlagventiles.

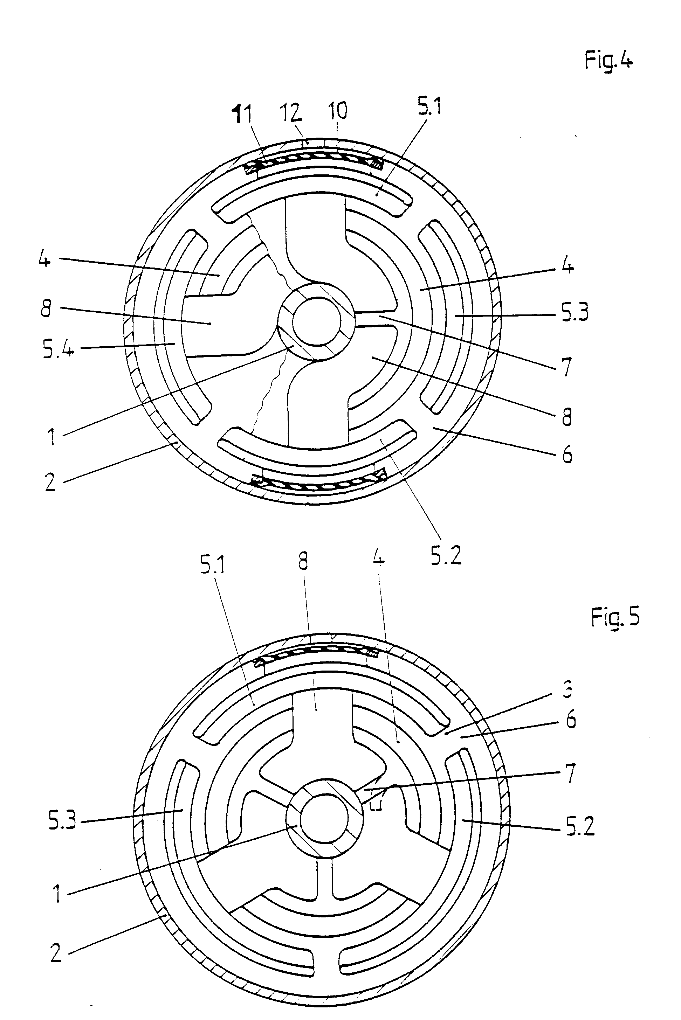

In der Figur 4 ist eine weitere Ausführung eines Gummilagers gezeigt, wobei zwischen dem Innenrohr 1 und dem Außenrohr 2 die Gummifeder 3 vorgesehen ist. über den Umfang verteilt sind in der Gummifeder 3 die Kammern 5.1, 5.2, 5.3 und 5.4 angeordnet. über einen Drosselkanal 4 sind einerseits die Kammern 5.1 und 5.2 miteinander verbunden und in einem weiteren Drosselkanal 4 ist die Verbindung der Kammern 5.3 und 5.4 hergestellt. Die Drosselkanäle 4 liegen dabei parallel zur Zeichenebene. Zusätzlich zu den Drosselkanälen 4 ist jeweils ein Kanal 8 vorgesehen, der in Form eines Bypasses parallel zum jeweiligen Drosselkanal 4 geschaltet ist und mit einem Ventil 7 versehen ist. Das Ventil 7 ist in Form einer Gummilippe ausgeführt, wobei diese Gummilippe den Kanal 8 verschließt und je nach Druckverhältnissen in den Kammern nach jeder Seite ausgelenkt werden kann. Bei Schwingungen mit großen Amplituden wird durch den erhöhten Innendruck in einer der Kammern die Gummilippe ausgelenkt und gibt den Kanal 8 als Bypass zum Drosselkanal 4 frei. Die Kammern 5.1 und 5.2 in diesem Ausführungsbeispiel sind mit Ausnehmungen 10 versehen, welche über je eine Membran 11 und je eine Entlüftungsbohrung 12 der Entkopplung dienen. Bei der Entkopplung wird im Betrieb erreicht, daß hochfrequente Schwingungen die Membran 11 auslenken, ohne daß eine Dämpfung durch den Drosselkanal 4 erfolgt. Durch die Anordnung von vier Kammern 5.1, 5.2, 5.3 und 5.4 ist eine Dämpfung in allen radielen Richtungen möglich.

Die Ausführung nach Figur 5 besitzt im Unterschied zu Figur 2 und 4 drei Kammern 5.1, 5.2 und 5.3 und dämpft dabei jedoch ebenfalls Schwingungen in allen radialen Richtungen. Die Drosselkanäle 4 und die Kanäle 8 des Bypasses sind wiederum in den einander zugewandten Flächen 6 aufgenommen. Die Kammern 5.1, 5.2 und 5.3 sind alle miteinander verbunden, wobei die Ventile 7 in beiden Druckrichtungen wirksam sind.

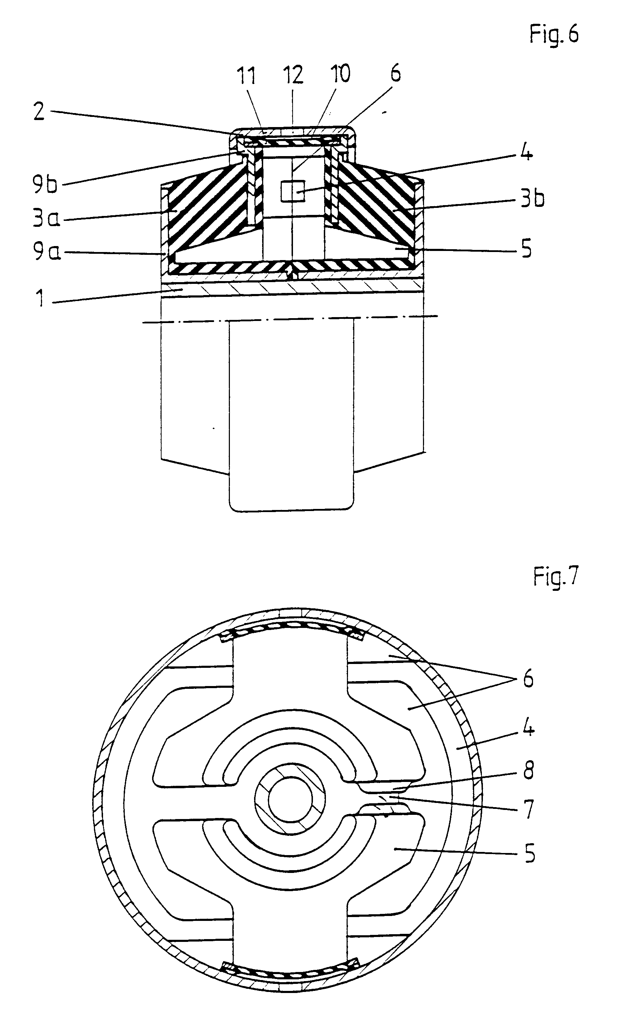

Die Ausführungsbeispiele nach den Figuren 6 und 7 zeigen ein Gummilager, bei dem die Kammern 5 dem Innenrohr 1 zugewandt sind und die Schubelemente 3a und 3b radial außen verlaufen. Das Konstruktionsprinzip wie auch die Wirkungsweise entsprechen den in Figur 1 bis 5 dargestellten Beispielen. Die Kammern 5 sind zur Dämpfung mit Drosselkanälen 4 sowie mit Ventilen 7 aufweisenden Kanälen 8 als Bypass zum Drosselkanal 4 versehen. Die Dämpfung erfolgt durch Verwendung von zwei Kammern 5 nur in einer Richtung (Hochrichtung). Ansonsten ist der Drosselkanal 4 wie auch der Kanal 8 in den einander zugewandten Flächen 6 der beiden Schubelemente 3a und 3b aufgenommen, die dann nach dem Zusammenbau funktionsfähig sind. Zur Entkopplung ist euch in dieser Ausführung eine nach außen durch die Entlüftungsbohrung 12 entlüftete Ausnehmung 10, welche zur Kammer 5 hin durch die Membran 11 abgedichtet ist, vorgesehen.

Die Schubelemente 3a und 3b sind mit jeweils einem inneren 9a und äußeren Armierungsteil 9b durch Vulkanisation verbunden, so daß nach der Montage des Innenrohres 1 und des Außenrohres 2 des fertige Gummilager entsteht.

Bezuqszeichenliste

| | |
|---|---|
| 1 | - Innenrohr |
| 2 | - Außenrohr |
| 3 | - Gummifeder |
| 3a | - Schubelement |
| 3b | - Schubelement |
| 4 | - Drosselkanal |
| 4a | - Ausnehmung |
| 4b | - Ausnehmung |
| 5 | - Kammer |
| 5.1 | - Kammer 1 |
| 5.2 | - Kammer 2 |
| 5.3 | - Kammer 3 |
| 5.4 | - Kammer 4 |

6     - Fläche
7     - Ventil
8     - Kanal
9a    - Armierungsteil (innen)
9b    - Armierungsteil (außen)
10    - Ausnehmung
11    - Membran
12    - Entlüftungsbohrung

**Patentansprüche**

1. Hydraulisch dämpfendes Gummilager, bestehend aus einem Innenrohr (1), einem dazu mit Abstand angeordneten Außenrohr (2) und einer dazwischen eingesetzten, aus zwei Teilen axial zusammengefügten Gummifeder (3), in welchem dämpfungsmittelgefüllte, hydraulisch über Drosselkanäle (4) miteinander verbundene, durch die Gummifeder (3) abgegrenzte Kammern (4) ausgebildet und nach außen abgedichtet sind, wobei die Drosselkanäle (4) als Ausnehmungen in einander zugewandten Flächen von Teilen des Gummilegers ausgebildet sind, welche den Drosselkanal (4) im zusammengebauten Zustand bilden, und mindestens zwei Kammern (5) zusätzlich über einen, mindestens ein Ventil aufweisenden Kanal (8) miteinander verbunden sind, und wobei ferner die Gummifeder (3) über den Umfang verlaufend angeordnet und gleichzeitig als Tragfeder und Dichtelement ausgebildet ist, und wobei die Gummifeder (3) durchgehend senkrecht zu ihrer Mittenachse geteilt ausgebildet ist, dadurch gekennzeichnet, daß die Gummifeder (3) aus zwei ringförmigen bei radialer Belastung auf Schub beanspruchten Schubelementen (3a, 3b) besteht, die jeweils durch Armierungsteile (9a, 9b) axial abgestützt und mit dem Innen- (1) und Außenrohr (2) verbunden sind, daß die Ausnehmungen (4a, 4b) für die Drosselkanäle (4) in den einander zugewandten Flächen der Schubelemente angeordnet sind und daß in mindestens einer Kammer (5) eine Ausnehmung (10) vorgesehen ist, welche durch eine Membran (11) abgedichtet ist.

2. Gummilager nach Anspruch 1, dadurch gekennzeichnet, daß mindestens ein Kanal (8) durch Ausnehmungen (8a, 8b) in den einander zugewandten Flächen (6) der Schubelemente (3a, 3b) ausgebildet ist, welche den Kanal (8) in zusammengebautem Zustand bilden.

3. Gummilager nach Anspruch 1 oder 2 dadurch gekennzeichnet, daß das Ventil (7) Bestandteil der Gummifeder (3) ist.

4. Gummilager nach Anspruch 3, dadurch gekennzeichnet, daß das Ventil (7) eine als elastische Gummilippe ausgebildete Ventilklappe aufweist.

**Claims**

1. Hydraulically damped rubber mounting comprising an inner tube (1), an outer tube (2) arranged spaced from it and a rubber spring (3) arranged between them and assembled axially from two components, in which there are formed chambers (4) defined by the rubber spring (3), filled with damping medium and hydraulically connected together through restricted passages (4) and sealed with respect to the outside, the restricted passages (4) being formed as recesses in mutually facing surfaces of parts of the rubber mounting, which form the restricted passage (4) in the assembled condition, and at least two chambers (5) being additionally connected together through a passage (8) having at least one valve, and furthermore the rubber spring (3) being arranged extending over the periphery and being formed simultaneously as a supporting spring and sealing element and the rubber spring (3) being constructed divided right through perpendicular to its central axis, characterised in that the rubber spring (3) comprises two ring-shaped shear elements (3a, 3b) subjected to shear on radial loading, respectively supported axially by reinforcing components (9a, 9b) and being connected to the inner (1) and outer tube (2), that the recesses (4a, 4b) for the restricted passages (4) are arranged in mutually facing surfaces of the shear elements and that there is provided in at least one chamber (5) a recess (10) which is sealed off by a diaphragm (11).

2. Rubber mounting according to claim 1, characterised in that at least one passage (8) is formed by recesses (8a, 8b) in the mutually facing surfaces (6) of the shear elements (3a, 3b) forming the passage (8) in the assembled-together condition.

3. Rubber mounting according to claim 1 or 2, characterised in that the valve (7) is a part of the rubber spring (3).

4. Rubber mounting according to claim 3, characterised in that, the valve (7) comprises a valve flap formed as an elastic rubber lip.

## Revendications

1. Support en caoutchouc à amortissement hydraulique, constitué d'un tube intérieur (1), d'un tube extérieur (2), qui en est disposé à une certaine distance, et d'un ressort en caoutchouc (3) qui est inséré entre les deux, qui est assemblé axialement en deux portions et dans lequel des chambres (4), réunies l'une à l'autre par l'intermédiaire de canaux à étranglement (4) et limitées par le ressort en caoutchouc (3), sont formées et rendues étanches à l'égard de l'extérieur, étant précisé que les canaux à étranglement (4) sont réalisés sous forme d'évidements dans les surfaces, orientées l'une vers l'autre, des portions du support en caoutchouc qui, à l'état assemblé, forment le canal à étranglement (4), et étant précisé qu'au moins deux chambres (5) sont réunies l'une à l'autre par l'intermédiaire d'un canal (8) présentant au moins un clapet, et étant précisé en outre que le ressort en caoutchouc (3) est disposé, continu, sur la périphérie et forme en même temps ressort porteur et élément d'étanchéité, et étant précisé que le ressort en caoutchouc (3) est prévu divisé de façon continue perpendiculairement à son axe médian,

   support caractérisé par le fait que le ressort en caoutchouc (3) est composé d'éléments annulaires (3a, 3b) qui, en cas de contrainte radiale, sont sollicités au cisaillement, qui sont, chacun, appuyés axialement par des pièces d'armature (9a, 9b) et qui sont réunis avec le tube intérieur (1) et avec le tube extérieur (2), par le fait que les évidements (4a, 4b) prévus pour les canaux à étranglement (4) sont disposés dans les surfaces, orientées l'une vers l'autre, des éléments sollicités au cisaillement et par le fait que dans au moins une chambre (5) est prévu un évidement (10) qui est rendu étanche au moyen d'une membrane (11).

2. Support en caoutchouc selon la revendication 1,
   caractérisé
   par le fait qu'au moins un canal (8) est formé par des évidements (8a, 8b) qui sont prévus dans les surfaces (6), orientées l'une vers l'autre, des éléments (3a, 3b) sollicités au cisaillement et qui, à l'état assemblé, forment le canal (8).

3. Support en caoutchouc selon la revendication 1 ou 2,
   caractérisé
   par le fait que le clapet (7) est une partie intégrante du ressort en caoutchouc (3).

4. Support en caoutchouc selon la revendication 3,
   caractérisé
   par le fait que le clapet (7) se présente sous forme d'un clapet conçu comme lèvre élastique en caoutchouc.

EP 0 335 005 B1

Fig. 1

Fig. 2

Fig. 3

6

Fig. 4

Fig. 5

Fig. 6

Fig. 7